Europäisches Patentamt

European Patent Office

Office européen des brevets

(11) Publication number: **0 196 649 B1**

# EUROPEAN PATENT SPECIFICATION

(45) Date of publication of patent specification: **26.08.92**  (51) Int. Cl.⁵: **H02K  17/36**, H02P 7/74

(21) Application number: **86104391.7**

(22) Date of filing: **01.04.86**

(54) Stepless speed adjusting A.C. Motor.

(30) Priority: **01.04.85 CN 85100607**

(43) Date of publication of application:
**08.10.86 Bulletin  86/41**

(45) Publication of the grant of the patent:
**26.08.92 Bulletin  92/35**

(84) Designated Contracting States:
**AT BE CH DE FR GB IT LI NL SE**

(56) References cited:
**DE-A- 2 000 400
DE-C- 224 721
DE-C- 696 050
DE-C- 826 769
FR-A- 573 884**

(73) Proprietor: **Tian, Yongning**
**106 Men 3, Building 4, Putaoyuan Zhanlan Road**
**Beijing(CN)**

Proprietor: **Tao, Fengbai**
**106 Men 3, Building 4, Putaoyuan Zhanlan Road**
**Beijing(CN)**

(72) Inventor: **Tian, Yongning**
**106 Men 3, Building 4, Putaoyuan Zhanlan Road**
**Beijing(CN)**
Inventor: **Tao, Fengbai**
**106 Men 3, Building 4, Putaoyuan Zhanlan Road**
**Beijing(CN)**

(74) Representative: **Lally, William et al**
**FORRESTER & BOEHMERT Franz-Joseph-Strasse 38**
**W-8000 München 40(DE)**

**Description**

This invention relates to a stepless speed adjusting A.C. motor having two shafts, their speed adjustment being realized by means of a combination of the speed of a rotary magnetic field thereof and the mechanical rotary speed of its rotor.

DE-C-224 721 and DE-C-696 050 disclose motors having two shafts. In these motors however there are two electromagnetic torques having opposite directions which are applied on the output shaft of the motor, which causes the output torque of the motor to decrease.

The motor according to this invention eliminates antagonistical torque applied to its output shaft by using a reverse rotary magnetic field or a gear system.

The two shafts of the motor according to the invention have such a definite relationship that the rotary speed of the output shaft can be controlled by adjusting the rotary speed of one of the two shafts.

This has not necessarily to be caused by applying an opposite electromagnetic torque. On the other hand, the rotary speed of the motor can also be adjusted by controlling its output torque.

A conventional slip motor has such an impedance in its rotor circuit that overcurrent can not be induced in the windings of the rotor at low speed. This causes the efficiency of the motor to be low. The surplus energy of this motor is difficult to adjust and to release.

The speed variation of a commutator motor is obtained by a change of the rotary magnetic field with appropriate frequency produced by changing the position of the winding that leads to the A.C. power supply. The response of this type of motor is somewhat erratic because of the appearance of sparks in commutation, and the construction of the motor becomes complicated when attempting to eliminate the sparks.

This invention relates to a stepless speed adjusting A. C. motor. The object of the present invention is to provide a stepless speed adjusting A. C. motor with a slip-converter, so that previous problems can be solved.

In the present invention, which combines at least two asynchronous motors, a slip motor, a frequency converter motor comprising two rotors, etc., not only is the rotor of a frequency converter motor mechanically turned by a rotor of the slip motor, but also the rotary magnetic field (the former) in the frequency converter motor is produced by an induced current in the windings of the rotor of the slip motor. A rotary magnetic field (the latter), having an appropriate frequency for the other rotor of the frequency converter motor, is produced by compositing the rotary frequency of said rotary magnetic field (the former) and the mechanical rotary frequency of said rotor of said frequency converter motor, so that frequency-converting ad stepless speed adjusting of the motor can be carried out - or an A. C. potential requiring frequency induced by said other rotor of the frequency converter motor - is used for turning and auxiliary motor, or feedback to an electric network. A precise definition of the invention is given in the claims.

The "motor Type I of the present invention" means the combination in which said rotary magnetic field (the latter) is used to perform frequency-converting and speed variation of the motor, or said A. C. potential requiring frequency induced by said other rotor of said converter motor, is used for turning an auxiliary motor. The "motor Type II of the present invention" means a combination in which said A. C. potential requiring frequency induced by said other rotor of said converter motor is used for feedback to an electric network.

In the drawings

Fig. 1    illustrates diagramatically the configuration of the motor Type I of the present invention,

Fig. 2    illustrates diagramatically the configuration of an alternative variation of the motor Type I of the present invention, and

Fig. 3    illustrates diagramatically the configuration of the motor Type II of the present invention.

Two types of motors according to the method of the present invention, which illustrate specific embodiments of the present invention as nonlimitative examples, will be described hereinafter with particular reference to the accompanying drawings.

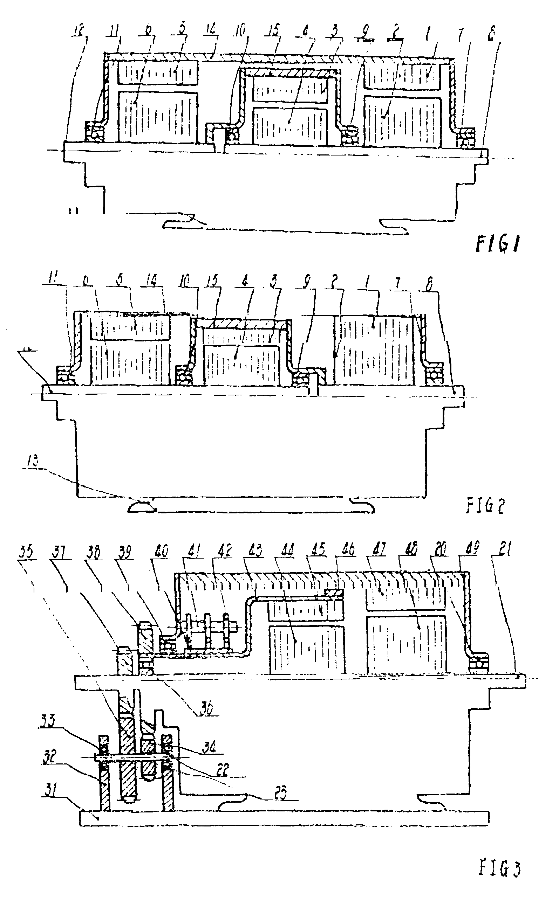

The configuration of the motor Type I of the present invention is illustrated in Fig. 1. Stator 1 and 5 comprising core and windings are fixed with a housing 14 of a motor mounted on a base 13 of the motor. A rotor 2, an interior rotor 4 comprising core and windings are fixed on a shaft 8. An external rotor 3 comprising core and windings is rigidly coupled with a shaft 12 by a support 15 connected to bearings 9, 10 for supporting the shaft 8 and to the housing 14 by bearings 7, 11. A rotor 6 is fixed on the shaft 12, so that the shafts 8 and 12 can independently rotate at an individual speed. The stator 1 and the rotor 2 having the shaft 8 constitute a slip motor. The external rotor 3 an the interior rotor 4 having the shaft 8 constitute a frequency converter motor. The stator 5 and the rotor 6 having the shaft 12 constitute an auxiliary motor.

An A. C. power supply is connected to the windings of the stator 1 of the slip motor, and windings of the rotor 2 of the slip motor to the windings of the interior rotor 4 of the converter motor along the shaft 8 through the bearing 9. While the rotor 2 of the slip motor is agitated by the rotary magnetic field produced by the stator 1 and mechanically turns the interior rotor 4, and induced A. C. potential is provided from the windings of the rotor 2 to the windings of the interior rotor 4. The terminals of the windings of the rotor 2 and the interior rotor 4 are connected in such a way that the rotary direction of a rotary magnetic field produced by an exciting current in the windings of the interior rotor 4, which is an induced current in the windings of said rotor 2, is opposite to the mechanical rotation of the shaft 8. The windings of the external rotor 3 of the converter motor are connected to the windings of the rotor 6 of the auxiliary motor. The external rotor 3 of the converter motor, the windings of which are also a power of the windings of the rotor 6, is agitated by a rotary magnetic field produced by the interior rotor 4 and mechanically turns the shaft 12. The terminals of the windings of the rotor 6 and the external rotor 3 are connected in such a way that the rotary direction of a rotary magnetic field produced by an exciting current in the windings of the rotor 6, which is an induced current in the windings of said external rotor 3, is opposite to that of the mechanical rotation of the shaft 12, said stator 5 of said auxiliary motor might be a squirrel-cage or a winding type configuration, and the electromagnetic torque in the same direction as the mechanical rotation of the shaft 12 is produced by the auxiliary motor proper.

The motor of the present invention can normally operate if the condition of the following equation is met:

$$\frac{((((\ 60f_0/P_{1/2}\ )\ -\ n_1\ )\cdot P_{1/2}\ /\ P_{2/2})\ +\ n_1\ -\ n_2)\cdot P_{2/2}}{P_{3/2}}\ -\ n_2 = \Delta n$$

that is,

$$n\ =\ \frac{120f_0\ +\ (\ P_2\ +\ P_3\ )\cdot n_2\ +\ P_3\cdot \Delta n}{P_1\ +\ P_2}$$

herein $f_0$ is a frequency of the input potential of the motor of the present invention, $P_1$, $P_2$, $P_3$ are the numbers of poles of the slip motor, the converter motor and the auxiliary motor respectively, $\Delta n$ is a slip amount of the auxiliary motor which is required in its normal operation, $n > 0$, $n_1$ and $n_2$ are the rotary speeds of the shaft 8 and 12 respectively.

With $n_2$ and $\Delta n$ given arbitrarily in the permitted variable speed range of the motor Type I, said equation can be met provided that the input potential of the motor is appropriately adjusted.

If $n_2 = 0$ and $\Delta n = 0$ are demanded, it is only required that

$n_1\ =\ 120f_0\ /\ (P_1\ +\ P_2)$.

make

$n_{10}\ =\ 120f_0\ /\ (P_1\ +\ P_2)$.

The state, in which the motor is at $n_1\ =\ n_{10}$, is called the preparatory state of the motor Type I. The process, in which $n_1$ is increased from zero to $n_{10}$, is called the preparatory process. When the motor is in the preparatory state, the speed of the shaft 12 with any load thereon is at zero.

After the time to start the motor at $n_1 = 0$, $n_2 = 0$, the input potential of the motor is increased from zero. So long as $n_1 < n_{10}$, that is, the motor is in the preparatory process, the electromagnetic torque of the shaft 8 produced by the converter motor and the slip motor are the same in direction, that urges $n_1$ to increase rapidly until $n_1 = n_{10}$, that is, the motor comes into the preparatory state. No matter how the load on the shaft 12 is, the shaft 8 is always started with no load. Therefore the starting of the motor is rapid without overcurrent in the windings. At the same time, the opposite impulse torque on the shaft 12 is very small and has only a slight influence on the shaft 12. The brake can be provided to the shaft 12 in the

3

preparatory process if necessary. As the input potential of the motor is increased, $n_1$ becomes $> n_{10}$ and the stepless speed variation can be carried out by means of successive adjustment of the speed of the shaft 12.

As $n_1$ is approaching the synchronous speed of the slip motor, $n_2$ approaches its limiting value $n_{max} \approx$ 120 $P_2 \cdot f_0/P_1(P_2 + P_3)$.

So the variable speed range of the motor Type I of the present invention is wide, which is $0 \leq n \leq n_{max}$.

An advantage of the motor of the present invention, which is different form a conventional converter motor, is that the lower the output speed of the motor, the higher is the frequency of the input potential of the converter motor thereof.

Shaft 12, the output torque on which is composited by the torque of the converter motor and the auxiliary motor, serves as a load shaft of the motor Type I of the present invention. Because the surplus energy produced by the slip motor can be transformed into mechanical energy and because the lower the speed of the shaft 12 is in general, the bigger the torque of the auxiliary motor is, the performance of the motor Type I of the present invention is better at lower speed.

The rotary direction of the shaft 8 and 12 can be altered by means of changing the phase order of the input potential of the motor.

As an alternative variation of the motor Type I of the present invention, the external rotor 3 of the converter motor can be rigidly coupled with the shaft 8 of the slip motor by support 15 connected to bearings 9, 10 for supporting the shaft 12 and to the housing 14 by bearings 7, 11. The interior rotor 4 is fixed on the shaft 12. As shown in Fig. 1, the external rotor 3 and the interior rotor 4 having the shaft 12 then constitute a converter motor. The windings of the rotor 2 of the slip motor are connected to the windings of the external rotor 3 of the converter motor. While the rotor 2 of the slip motor 15 is agitated by a rotary magnetic field produced by the stator 1 and mechanically turns the external rotor 3, an induced A. C. potential is provided from the windings of the rotor 2 to the windings of external rotor 3. The terminals of the windings of the rotor 2 and the external rotor 3 are connected in such a way that the rotary direction of a rotary magnetic field produced by an exciting current in the windings of the external rotor 3, which is an induced current in the windings of said rotor 2, is opposite to that of the mechanical rotation of the shaft 12. The windings of the interior rotor 4 of the converter motor are connected to the windings of the rotor 6 of the auxiliary motor along the shaft 12 through the bearing 10. The interior rotor 4 of the converter motor, the windings of which are also a power of the windings of the rotor 6, is agitated by a rotary magnetic field produced by the external rotor 3 and mechanically turns the shaft 12. The terminals of the windings of the rotor 6 and the interior rotor 4 are connected in such a way, that the rotary direction of a rotary magnetic field produced by an exciting current in the windings of the rotor 6, which is an induced current in the windings of the interior rotor 4, is opposite to that of the mechanical rotation of the shaft 12.

As another embodiment of the present invention, the auxiliary motor in the embodiment I or II can be eliminated, and the windings of the rotor of the converter motor connected to the windings of the rotor 6 of the auxiliary motor are shortened, or form a squirrel-cage type configuration. As for example, a Type NED-501 motor with 2 poles and 57v is used as a slip motor, a Type 5638 motor with 8 poles and 27v is used as a frequency converter motor. The shaft 12 still serves as a load shaft. In this case. the total efficiency of the motor can be increased further, the construction simplified, and the cost lowered.

The motor Type I of the present invention without an electric brush and a commutation device is simple and sturdy in construction, capable of reversing rotation, and has a wide variable speed range from zero. The motor is easy to start with no overcurrent and can be started frequently. It operates smoothly without any sparks. The motor has high reliability, easy maintenance and repair, and high overload capacity. Because the lower the speed of the shaft 12 is, the bigger the output torque is, the performance of the motor is better at lower speed.

The motor Type I is suitable for use with electrically powered towing, lifting equipment, metallurgical, mining, and other fields where motors with stepless speed variation are used. It can also be used for explosion-proof equipment with infinite speed variation.

In high power operation, these advantages are even better.

The configuration of the motor Type II of the present invention is illustrated in Fig. 3. A stator 47 comprising core and windings is fixed with a housing 49 of the motor mounted on the base 41 of the motor. A rotor 48 and an interior rotor 44 comprising core and windings are fixed on a shaft 21. An external rotor 45 comprising core and windings is fixed with a support 43 connected to a housing 49 by bearings 39, 46. The shaft 21 is connected to a support 43 by a bearing 36 and to the housing 49 by a bearing 30. A gear 37 is fixed on the shaft 21, gears 34, 35 are fixed on a shaft 22 connected to a shaft support 32 fixed on the base 31 by bearings 23, 33, a gear 38 is fixed with the support 43. The gears 37, 38 mesh with the gears 35, 34 respectively, so that the external rotor 45 rotates in the same direction as that of the shaft 21 at a

EP 0 196 649 B1

static speed ratio. The gears. 34, 35, 37 and 38 constitute a gear system of the motor, the rotor 48 having the shaft 21. The interior rotor 44, the external rotor 45, the support 43 and the gear system constitute a rotor system of the motor. An electric brush 42 is fixed with the housing 49 by a support 41; a slip ring 40 is fixed on the support 43. The stator 47 and the rotor 48 having the shaft 21 constitute a slip motor; the external rotor 45 and the interior rotor 44 having the shaft 21 constitute a converter motor.

An A. C. power supply is connected to the windings of the stator 47 of the slip motor, and the windings of the rotor 48 of the slip motor are connected to the windings of the interior rotor 44 of the converter motor. While the rotor 48 of the slip motor is agitated by a rotary magnetic field produced by the stator 47 and mechanically turns the interior rotor 44, the external rotor 45 rotates in the same direction as that of the rotor 48 at a static speed ratio by the gear system, and an A. C. potential is provided from the windings of the rotor 48 of the slip motor to the windings of the interior rotor 44 of the converter motor. The terminals of the windings of the rotor 48 and the interior rotor 44 are connected in such a way, that the rotary direction of a rotary magnetic field produced by an exciting current in the windings of the interior rotor 44 of the converter motor, which is an induced current in the windings of said rotor 48, is the same as that of the mechanical rotation of the shaft 21. The induced potential of the windings of the external rotor 45 is led out of the slip ring 40 and the electric brush 42.

In order to make the frequency of the output potential of the motor Type II of the present invention be the same as that of the input potential, the following equation must be met:

$$(((( 60f_0/P_{1/2} ) - n_1 )^{\bullet} P_{1/2} / P_{2/2}) + n_2 - n_1 )^{\bullet} P_{2/2} = 60f_0,$$

that is,

$$n_1/n_2 = P_2 / (P_2 - P_1),$$

herein $P_1$, $P_2$ are the numbers of the poles of the slip motor and the converter motor respectively, $n_1$, $n_2$ are the rotary speeds of the shaft 21 and the external rotor 45 respectively.

So long as the number $P_2$ is greater than the number P and the condition of the equation

$$n_1/n_2 = P_2 /(P_2 - P_1)$$

is met by the gear system, it is ensured that the output potential of the motor has the same frequency as the input potential thereof at any speed of the shaft 21, and the surplus energy produced by the slip motor at that speed can be fed back to an electric network.

When the number $P_2$ is less than the number $P_1$, the gear system is designed in such a configuration that the rotary direction of the interior rotor 44 and the external rotor 45 of the converter motor are opposite to each other, and the condition of the equation

$$n_1/n_2 = P_2 /(P_1 - P_2)$$

is met. For example, a gear which meshes with the gear 35 as well as the gear 37 can be added between the gear 35 and the gear 37. The configuration and winding wiring are the same as that in the embodiment 4, except the above mentioned.

The electromagnetic torque of the shaft 21 produced by the converter motor, which has a direction opposite to the mechanical rotary direction of the shaft 21, can be transformed into interior force in the rotor system of the motor by this rotor system. As a result, the output torque of the shaft 21 can not be decreased.

The infinite speed variation of the motor Type II of the present invention can be carried out by means of adjusting the amount of the feedback of the motor, or the input potential of the motor, of a combination of both.

The output torque of the motor is that of the slip motor.

The motor Type II of the present invention is also small, simple and sturdy in construction, capable of reversing rotation, and with a constant output torque. It is inexpensive and suitable for the speed variation of a blower, fan or pump.

**Claims**

1. A stepless speed adjusting A.C. motor, characterized in that said motor comprises at least two

5

asynchronous motors :
- a slip motor which again comprises a stator (1) and a rotor (2) having a shaft (8),
- a frequency converter motor comprising two rotors, an external rotor (3) and an interior rotor (4) having a shaft (8) and

said stator (1) being fixed at a housing (14) of the motor, which is mounted on a base (13) of the motor, said external rotor (3) being rigidly coupled with a shaft (12) by a support (15), which is connected to bearings (9, 10) for supporting said shaft (8) and to the housing (14) by bearings (7, 11), so that shaft (8) and shaft (12) can independently rotate at an individual speed;

an A.C. power supply being connected to the windings of said stator (1), the windings of said rotor (2) being connected to the windings said interior rotor (4) along said shaft (8) through said bearing (9) in such a way, that the rotary direction of the rotary magnetic field produced by an exciting current in said windings of said interior rotor 4, - which is an induced current in said windings of said rotor (2) -, is opposite to that of the mechanical rotation of said shaft (8).

2. A stepless speed adjusting A.C. motor, characterized in that said motor comprises:
- a slip motor which again comprises a stator (1) and a rotor (2) having a shaft (8),
- a frequency converter motor comprising an external rotor (3) and an interior rotor (4) having a shaft (8) and
- an auxiliary motor comprising a stator (5) and a rotor (6) having a shaft (12),
said stators (1) and (5) being fixed at a housing (14) of the motor, which is mounted on a base (13) of the motor, said external rotor (3) being rigidly coupled with said shaft (12) by a support (15), which is connected to bearings (9, 10) for supporting said shaft (8) and to housing (14) by bearings (7, 11), so that shaft (8) and shaft (12) can independently rotate at an individual speed;

an A.C. power supply being connected to the windings of said stator (1), the windings of said rotor (2) being connected to the windings said interior rotor (4) along said shaft (8) through said bearing (9) in such a way, that the rotary direction of the rotary magnetic field produced by an exciting current in said windings of said interior rotor 4, - which is an induced current in said windings of said rotor (2) -, is opposite to that of the mechanical rotation of said shaft (8),

said windings of said external rotor (3) are connected to the windings of said rotor (6) and such a way that the rotary direction of the rotary magnetic field produced by an exciting current in said windings of said rotor (6), - which is an induced current in said winding of said external rotor (3) -, is opposite to that of the mechanical rotation of said shaft (12); and

said shaft (12) serves as a load shaft of said motor.

3. A stepless speed adjusting A.C. motor, characterized in that

said motor comprises :
- a slip motor, which comprises a stator (1) and a rotor (2) having a shaft (8),
- a frequency converter motor comprising an external rotor (3) and an interior rotor (4) having a shaft (12) and
- an auxiliary motor comprising a stator (5) and a rotor (6) having a shaft (12),
said stator (1) and (5) are fixed with a housing (14) of the motor, which is mounted on a base (13) of the motor, said external rotor (3) being rigidly coupled with said shaft (8) by a support (15) connected to bearing (9), (1)0 for supporting said shaft (12) and to the housing (14) by bearing 7, (1)1, so that said shaft (8) and (12) can independently rotate at an individual speed;

an A.C. power supply being connected to the windings of said rotor (1), the windings of said rotor (2), which are connected to the windings of said external rotor (3) in such a way that the rotary direction of a rotary magnetic field produced by an exciting current in said windings of said external rotor 3, - which is an induced current in said windings of said rotor (2) -, is opposite to that of the mechanical rotation of said shaft (8);

said windings of said interior rotor (4) are connected to the windings of said rotor (6) along said shaft (12) through said bearing (1)0 in such a way, that the rotary direction of a rotary magnetic field

6

EP 0 196 649 B1

produced by an exciting current in said windings of said rotor (6), - which is an induced current in said windings of said interior rotor (4) -, is opposite to that of the mechanical rotation of said shaft (12); and

said shaft (12) serves as a load shaft of said motor.

4. A stepless speed adjusting A.C. motor according to claim 1 or 2, characterized in that said auxiliary motor is eliminated, and said windings of said rotor of said frequency converter motor connected to said windings of said rotor (6) are shortened, or form a squirrel-cage type configuration, while said shaft (12) still serves as a load shaft.

5. A stepless speed adjusting A.C. motor, characterized in that

said motor comprises :
   - a slip motor which again comprises a stator (47) and a rotor (48) having a shaft (21),
   - a frequency converter motor comprising an external rotor (45) and an interior rotor (44) having a shaft (21),
   - means for leading out an induced potential consisting of a slip ring (40), an electric brush support (41) and an electric brush (42) and a gear system,
said stator (47) being fixed with the housing (49) of the motor mounted on a base (31) of the motor, said external rotor (45) being fixed with the support (43) connected to the housing (49) by a bearing (20), said electric brush (42) being fixed with the housing (49) by said support (41), said slip ring (40) being fixed on said support (43);

an A.C. power supply being connected to the windings of said stator (47), the windings of said rotor (48) being connected to the windings of said interior rotor (44) in such a way, that the rotary direction of the rotary magnetic field produced by an exciting current in said windings of said interior rotor (44) - which is an induced current in said windings of said rotor (48) - is the same as that of a mechanical rotation of said shaft (21), an induced potential in the windings of said external rotor (45) is led out by said slip ring (40) and said electric brush (42), and fed back to a network.

6. A stepless speed adjusting A.C. motor according to claim 5, characterized in that, when the number $P_2$ of the poles of said frequency converter motor is greater than the number $P_1$ of the poles of said slip motor, said gear system is designed in such a configuration that the rotary direction of said external rotor (45) (its rotary speed being $n_2$) of said frequency converter motor and said shaft (21) (its rotary speed being $n_1$) of the motor is the same, and the condition of the equation $n_1/n_2 = P_2/(P_2 - P_1)$ is met.

7. A stepless speed adjusting A.C. motor according to claim 5, characterized in that, when the number $P_2$ of the poles of said frequency converter motor is less than the number P of the poles of said slip motor, said gear system is designed in such a configuration that the rotary direction of said external rotor (45) (its rotary speed being $n_1$) of said frequency converter motor and said shaft (21) (its rotary speed being $n_1$) of the motor is opposite to each other, and the condition of the equation $n_1/n_2 = P_2/-(P_1-P_2)$ is met.

8. A stepless speed adjusting A.C. motor as claimed in claim 6 or 7, characterized in that the stepless speed adjustments of said motor Type II, in which said A.C. potential with the required frequency induced by said other rotor of said frequency converter motor is used for feedback to an electric network, is carried out be means of adjusting the amount of said feedback of said motor to an electrical network, which applies the power to said A.C. motor, or by increasing or decreasing said input potential of said motor, or a combination of both.

**Patentansprüche**

1. Wechselstrommotor mit stufenloser Geschwindigkeitseinstellung, dadurch gekennzeichnet, daß der Motor wenigstens zwei Synchronmotoren aufweist, nämlich:
   - einen Schlupfmotor, der wiederum einen Stator (1) und einen Rotor (2) mit einer Welle (8) aufweist, und
   - einen Frequenzkonvertermotor mit zwei Rotoren, nämlich einem äußeren Rotor (3) und einem

7

inneren Rotor (4) mit einer Welle (8),

wobei der Stator (1) an einem Motorgehäuse (14) fixiert ist, das an einer Basis (13) des Motors befestigt ist, der äußere Rotor (3) fest mit einer Welle (12) über eine Stütze (15) gekoppelt ist, die mit Lagern (9, 10) zum Tragen der Wellen (8) und dem Gehäuse (14) über Lager (7, 11) verbunden ist, so daß die Welle (8) und die Welle (12) unabhängig mit einer jeweiligen Geschwindigkeit drehen können,

und wobei die Wechselspannungsquelle mit den Windungen des Stators (1) verbunden ist, die Windungen des Rotors (2) mit den Windungen des inneren Rotors (4) entlang der Welle (8) durch die Lager (9) derart verbunden sind, daß die Drehrichtung des magnetischen Drehfelds, das von einem Erregerstrom in den Windungen des inneren Rotors (4) erzeugt wird, - der ein in den Windungen des Rotors (2) induzierter Strom ist -, der mechanischen Drehung der Wellen (8) entgegengesetzt ist.

2. Wechselstrommotor mit stufenloser Geschwindigkeitseinstellung, dadurch gekennzeichnet, daß der Motor aufweist:
   - einen Schlupfmotor, der wiederum einen Stator (1) und einen Rotor (2) mit einer Welle (8) aufweist, und
   - einen Frequenzkonvertermotor mit zwei Rotoren, nämlich einem äußeren Rotor (3) und einem inneren Rotor (4) mit einer Welle (8),
   - einen Hilfsmotor mit einem Stator (5) und einem Rotor (6), der eine Welle (12) hat,

wobei die Statoren (1, 5) an einem Motorgehäuse (14) fixiert sind, das an einer Basis (13) des Motors befestigt ist, der äußere Rotor (3) fest mit einer Welle (12) über eine Stütze (15) gekoppelt ist, die mit Lagern (9, 10) zu Tragen der Welle (8) und dem Gehäuse (14) über Lager (7, 11) verbunden ist, so daß die Welle (8) und die Welle (12) unabhängig mit einer jeweiligen Geschwindigkeit drehen können,

und wobei die Wechselspannungsquelle mit den Windungen des Stators (1) verbunden ist, die Windungen des Rotors (2) mit den Windungen des inneren Rotors (4) entlang der Welle (8) durch die Lager (9) derart verbunden sind, daß die Drehrichtung des magnetischen Drehfelds, das von einem Erregerstrom in den Windungen des inneren Rotors (4) erzeugt wird, - der ein in den Windungen des Rotors (2) induzierter Strom ist -, der mechanischen Drehung der Wellen (8) entgegengesetzt ist,

und wobei die Windungen des äußeren Rotors (3) mit den Windungen des Rotors (6) derart verbunden sind, daß die Drehrichtung des magnetischen Drehfelds, das von einem Erregerstrom in den Windungen des Rotors (6) erzeugt wird, - der ein induzierter Strom in der Windung des äußeren Rotors (3) ist -, derjenigen der mechanischen Rotation der Welle (12) entgegengesetzt ist; und

die Welle (12) als Lastwelle des Motors dient.

3. Wechselstrommotor mit stufenloser Geschwindigkeitseinstellung, dadurch gekennzeichnet, daß der Motor aufweist:
   - einen Schlupfmotor, der wiederum einen Stator (1) und einen Rotor (2) mit einer Welle (8) aufweist, und
   - einen Frequenzkonvertermotor mit zwei Rotoren, nämlich einem äußeren Rotor (3) und einem inneren Rotor (4) mit einer Welle (12),
   - einen Hilfsmotor mit einem Stator (5) und einem Rotor (6), der eine Welle (12) hat,

wobei die Statoren (1) und (5) an einem Motorgehäuse (14) fixiert ist, das an einer Basis (13) des Motors befestigt ist, der äußere Rotor (3) fest mit einer Welle (12) über eine Stütze (15) gekoppelt ist, die mit Lagern (9, 10) zu Tragen der Welle (12) und dem Gehäuse (14) über Lager (7, 11) verbunden ist, so daß die Welle (8) und die Welle (12) unabhängig mit einer jeweiligen Geschwindigkeit drehen können,

und wobei die Wechselspannungsquelle mit den Windungen des Stators (1) verbunden ist, die Windungen des Rotors (2) mit den Windungen des äußeren Rotors (3) derart verbunden sind, daß die Drehrichtung des magnetischen Drehfelds, das von einem Erregerstrom in den Windungen des äußeren Rotors (4) erzeugt wird, - der ein in den Windungen des Rotors (2) induzierter Strom ist -, der mechanischen Drehung der Wellen (8) entgegengesetzt ist,

und wobei die Windungen des inneren Rotors (4) mit den Windungen des Rotors (6) entlang der Welle (12) durch das Lager (10) derart verbunden sind, daß die Drehrichtung des magnetischen Drehfelds, das von einem Erregerstrom in den Windungen des Rotors (6) erzeugt wird, - der ein induzierter Strom in der Windung des äußeren Rotors (3) ist -, derjenigen der mechanischen Rotation der Welle (12) entgegengesetzt ist; und

die Welle (12) als Lastwelle des Motors dient.

4. Wechselspannungsmotor mit stufenlos einstellbarer Geschwindigkeit nach Anspruch 1 oder Anspruch 2, dadurch gekennzeichnet, daß auf den Hilfsmotor verzichtet wird und daß die Windungen des Rotors des Frequenzkonvertermotors, die mit den Windungen des Rotors (6) verbunden sind, kurzgeschlossen sind, oder eine Käfigausbildung darstellen, während die Welle (12) weiterhin als Lastwelle dient.

5. Wechselstrommotor mit stufenloser Geschwindigkeitseinstellung, dadurch gekennzeichnet, daß der Motor aufweist:
   - einen Schlupfmotor, der wiederum einen Stator (47) und einen Rotor (48) mit einer Welle (21) aufweist, und
   - einen Frequenzkonvertermotor mit einem äußeren Rotor (45) und einem inneren Rotor (44) mit einer Welle (21),
   - Mittel zum Herausführen eines induzierten Potentials, die aus einem Schleifring (40), einem elektrischen Bürstenträger (41) und einer elektrischen Bürste (42) sowie einem Zahnradsystem bestehen,

   wobei der Stator (47) an einem Motorgehäuse (14) fixiert ist, das an einer Basis (31) des Motors befestigt ist, der äußere Rotor (45) fest mit der mit dem Gehäuse (49 über eine Stütze (43) verbunden ist, wobei die elektrische Bürste (42) über die Stütze (41) mit dem Gehäuse (49) und der Schleifring (40) an der Stütze (43) befestigt ist,

   und wobei die Wechselspannungsquelle mit den Windungen des Stators (47) verbunden ist, die Windungen des Rotors (48) mit den Windungen des inneren Rotors (44) entlang derart verbunden sind, daß die Drehrichtung des magnetischen Drehfelds, das von einem Erregerstrom in den Windungen des inneren Rotors (44) erzeugt wird, - der ein in den Windungen des Rotors (48) induzierter Strom ist -, der mechanischen Drehung der Wellen (8) gleichgerichtet ist, ein elektrisches Potential in den Windungen des äußeren Rotors (45) durch den Schleifring (40) und die elektrische Bürste nach außen geführt und in ein Netz zurückgeführt wird.

6. Wechselstrommotor mit stufenloser Geschwindigkeitseinstellung nach Anspruch 5 dadurch gekennzeichnet, daß dann, wenn die Anzahl $P_2$ der Pole des Frequenzkonvertermotors größer ist als die Anzahl $P_1$ der Pole des Schlupfmotors, das Zahnradsystem derart ausgebildet ist, daß die Drehrichtung des externen Rotors (45) (dessen Drehgeschwindigkeit $n_2$ ist) des Frequenzkonvertermotors und die der Welle (21) (deren Drehgeschwindigkeit $n_1$) des Motors gleich sind und die Bedingung der Gleichung $n_1/n_2 = P_2/(P_1-P_2)$ erfüllt wird.

7. Wechselstrommotor mit stufenloser Geschwindigkeitseinstellung nach Anspruch 5 dadurch gekennzeichnet, daß dann, wenn die Anzahl $P_2$ der Pole des Frequenzkonvertermotors kleiner ist als die Anzahl $P_1$ der Pole des Schlupfmotors, das Zahnradsystem derart ausgebildet ist, daß die Drehrichtung des externen Rotors (45) (dessen Drehgeschwindigkeit $n_2$ ist) des Frequenzkonvertermotors und die der Welle (21) (deren Drehgeschwindigkeit $n_1$) des Motors einander entgegengesetzt sind und die Bedingung der Gleichung $n_1/n_2 = P_2/(P_1-P_2)$ erfüllt wird.

8. Wechselstrommotor mit stufenloser Geschwindigkeitseinstellung nach Anspruch 6 oder 7, dadurch gekennzeichnet, daß die stufenlose Geschwindigkeitseinstellung des Motors vom Typ II, in den das Wechselspannungspotential mit der erforderlichen Frequenz durch den anderen Rotor des Frequenzkonvertermotors induziert wird, verwendet wird zur Rückführung in ein elektrisches Netz, ausgeführt wird durch Mittel des Justierens des Betrags der Rückführung des Motors in das elektrische Netz, das die Leistung für den Wechselstrommotor erbringt, oder durch Erhöhung oder Verringerung des Eingangspotentials des Motors, oder aber durch eine Kombination beider.

## Revendications

1. Moteur à courant alternatif à vitesse réglable de façon continue, caractérisé par le fait qu'il comprend au moins deux motors asynchrones :
- un moteur à glissement comportant un stator (1) et un rotor (2) avec un arbre (8),
- un moteur convertisseur de fréquence comportant deux rotors, un rotor externe (3) et un rotor interne (4) avec un arbre (8) et

ledit stator (1) étant fixé sur un carter (14) du moteur, qui est monté sur une base (13) du moteur, ledit rotor externe (3) étant rigidement couplé à un arbre (12) par un support (15) qui est relié à des paliers (9, 10) de support dudit arbre (8) et au carter (14) par des paliers (7, 11), de façon telle que ces arbres (8) et (12) peuvent tourner indépendamment à une vitesse propre,

une source d'alimentation alternative étant reliée aux bobinages dudit stator (1), les bobinages dudit rotor (2) étant reliés aux bobinages dudit rotor interne (4) le long dudit arbre (8) au travers desdits paliers (9) de façon telle que le sens de rotation du champ magnétique rotatif produit par un courant d'excitation dans lesdits bobinages dudit rotor interne (4) - qui est un courant induit dans lesdits bobinages dudit rotor (2) - est opposé à celui de la rotation mécanique dudit arbre (8).

2. Moteur à courant alternatif à vitesse réglable de façon continue, caractérisé par le fait qu'il comporte :
- un moteur à glissement comportant un stator (1) et un rotor (2) avec un arbre (8),
- un moteur convertisseur de fréquence comportant un rotor externe (3) et un rotor interne (4) avec un arbre (8) et
- un moteur auxiliaire comportant un stator (5) et un rotor (6) avec un arbre (12),

lesdits stators (1) et (5) étant fixés sur un carter (14) du moteur, qui est monté sur une base (13) du moteur, ledit rotor externe (3) étant rigidement couplé audit arbre (12) par un support (15) qui est relié à des paliers (9, 10) de support dudit arbre (8) et au carter (14) par des paliers (7, 11), de façon telle que les arbres (8) et (12) peuvent tourner indépendamment à une vitesse propre,

une source d'alimentation alternative étant reliée aux bobinages dudit stator (1), les bobinages dudit rotor (2) étant reliés aux bobinages dudit rotor interne (4) le long dudit arbre (8) au travers desdits paliers (9) de façon telle que le sens de rotation du champ magnétique rotatif produit par un courant d'excitation dans lesdits bobinages dudit rotor interne (4) - qui est un courant induit dans lesdits bobinages dudit rotor (2) - est opposé à celui de la rotation mécanique dudit arbre (8),

lesdits bobinages dudit rotor externe (3) sont reliés aux bobinages dudit rotor (6) de façon telle que le sens de rotation du champ magnétique rotatif produit par un courant d'excitation dans lesdits bobinages dudit rotor (6) - qui est un courant induit dans lesdits bobinages dudit rotor externe (3) - est opposé à celui de la rotation mécanique dudit arbre (12), et

ledit arbre (12) sert d'arbre d'entraînement dudit moteur.

3. Moteur à courant alternatif à vitesse réglable de façon continue, caractérisé par le fait qu'il comporte :
- un moteur à glissement comportant un stator (1) et un rotor (2) avec un arbre (8),
- un moteur convertisseur de fréquence comportant un rotor externe (3) et un rotor interne (4) avec un arbre (12) et
- un moteur auxiliaire comportant un stator (5) et un rotor (6) avec un arbre (12),

lesdits stators (1) et (5) étant fixés sur un carter (14) du moteur, qui est monté sur une base (13) du moteur, ledit rotor externe (3) étant rigidement couplé audit arbre (8) par un support (15) qui est relié à des paliers (9, 10) de support dudit arbre (12) et au carter (14) par des paliers (7, 11), de façon telle que ces arbres (8) et (12) peuvent tourner indépendamment à une vitesse propre,

une source d'alimentation alternative étant reliée aux bobinages dudit stator (1), les bobinages dudit rotor (2) étant reliés aux bobinages dudit rotor externe (3) de façon telle que le sens de rotation du champ magnétique rotatif produit par un courant d'excitation dans lesdits bobinages dudit rotor externe (3) - qui est un courant induit dans lesdits bobinages dudit rotor (2) - est opposé à celui de la rotation mécanique dudit arbre (8),

lesdits bobinages dudit rotor interne (4) étant reliés aux bobinages dudit rotor (6) le long dudit arbre (12) au travers dudit palier (10) de façon telle que le sens de rotation du champ magnétique rotatif produit par un courant d'excitation dans lesdits bobinages dudit rotor (6) - qui est un courant induit dans lesdits bobinages dudit rotor interne (4) - est opposé à celui de la rotation mécanique dudit arbre (12), et

ledit arbre (12) sert d'arbre d'entraînement dudit moteur.

4. Moteur à courant alternatif à vitesse réglable de façon continue selon l'une des revendications 1 ou 2, caractérisé par le fait que ledit moteur auxiliaire est éliminé et lesdits bobinages dudit rotor dudit moteur convertisseur de fréquence reliés auxdits bobinages dudit rotor (6) sont court-circuités ou sont en configuration du type cage d'écureuil, ledit arbre (12) servant encore d'arbre de transmission.

5. Moteur à courant alternatif à vitesse réglable de façon continue, caractérisé par le fait qu'il comporte :
   - un moteur à glissement comportant un stator (47) et un rotor (48) avec un arbre (21),
   - un moteur convertisseur de fréquence comportant un rotor externe (45) et un rotor interne (44) avec un arbre (21) et
   - des moyens pour faire sortir un potentiel induit, consistant en une bague collectrice (40), un porte-balai électrique (41) et un balai électrique (42) et une articulation,
   ledit stator (47) étant fixé au carter (49) du moteur monté sur une base (31) du moteur, ledit rotor externe (45) étant fixé au support (43) relié au carter (49) par un palier (20), ledit balai électrique (42) étant fixé au carter (49) par le ledit porte-balai (41), ladite bague collectrice (40) étant fixée audit support (43),

   une source d'alimentation alternative étant reliée aux bobinages dudit stator (47), les bobinages dudit rotor (48) étant reliés aux bobinages dudit rotor interne (44) de façon telle que le sens de rotation du champ magnétique rotatif produit par un courant d'excitation dans lesdits bobinages dudit rotor interne (44) - qui est un courant induit dans lesdits bobinages dudit rotor (48) - est identique à celui de la rotation mécanique dudit arbre (21), un potentiel induit dans les bobinages dudit rotor externe (45) sort par ladite bague collectrice (40) et ledit balai (42) et est renvoyé à un réseau.

6. Moteur à courant alternatif à vitesse réglable de façon continue selon la revendication 5, caractérisé par le fait que ladite articulation est agencée de façon telle que, quand le nombre P2 de pôles dudit moteur convertisseur de fréquence dépasse celui, P1, des pôles dudit moteur à glissement, le sens de rotation dudit rotor externe (45) (dont la vitesse de rotation est n2) dudit moteur convertisseur de fréquence est le même que celui dudit arbre (21) (dont la vitesse de rotation est n1) du moteur et la condition de l'équation $n1/n2 = P2/(P2-P1)$ est satisfaite.

7. Moteur à courant alternatif à vitesse réglable de façon continue selon la revendication 5, caractérisé par le fait que ladite articulation est agencée de façon telle que, quand le nombre P2 de pôles dudit moteur convertisseur de fréquence est inférieur à celui, P1, des pôles dudit moteur à glissement, le sens de rotation dudit rotor externe (45) (dont la vitesse de rotation est n2) dudit moteur convertisseur de fréquence est opposé à celui dudit arbre (21) (dont la vitesse de rotation est n1) du moteur et la condition de l'équation $n1/n2 = P2/(P1-P2)$ est satisfaite.

8. Moteur à courant alternatif à vitesse réglable de façon continue selon l'une des revendications 6 et 7, caractérisé par le fait que les réglages continus de vitesse dudit moteur de Type II, dans lequel ledit potentiel alternatif à la fréquence voulue, induit par ledit autre rotor dudit moteur convertisseur de fréquence, sert de rétroaction à un réseau électrique, sont effectués en réglant le taux de rétroaction dudit moteur vers un réseau électrique qui fournit l'énergie électrique audit moteur alternatif, ou en faisant croître ou décroître ledit potentiel d'entrée dudit moteur, ou en faisant une combinaison des deux.

FIG 1

FIG 2

FIG 3